# EUROPEAN PATENT SPECIFICATION

(11) **EP 3 708 493 B1**
(45) Date of publication and mention of the grant of the patent: **10.11.2021**
(21) Application number: 19162017.8
(22) Date of filing: 11.03.2019
(51) Int. Cl.: B64D 13/06, B64D 13/08, B64D 15/04, B64D 27/20, F02C 6/08, F02K 3/06

(54) **AIRCRAFT PROPULSION SYSTEM INCLUDING A HEAT EXCHANGER SYSTEM**
FLUGZEUGANTRIEBSSYSTEM MIT EINEM WÄRMETAUSCHERSYSTEM
SYSTÈME DE PROPULSION D'AÉRONEF COMPRENANT UN SYSTÈME D'ÉCHANGEUR THERMIQUE

(43) Date of publication of application: 16.09.2020
(73) Proprietor: Airbus SAS, 31700 Blagnac (FR); Airbus Operations (S.A.S.), 31060 Toulouse Cedex 9 (FR); Airbus Operations S.L., 28906 Madrid (ES)
(72) Inventor: MEDDA, Bruno, 31170 TOURNEFEUILLE (FR); MARTINO-GONZALEZ, Esteban, 28300 ARANJUEZ (ES); STEVENS, Thomas, 31170 TOURNEFEUILLE (FR); CAYSSIALS, Julien, 31150 GAGNAC SUR GARONNE (FR); PRIETO PADILLA, Juan Tomas, 28906 Getafe (Madrid) (ES); SOULIE, Adeline, 82600 VERDUN SUR GARONNE (FR); POIRIER, Didier, 31700 BLAGNAC (FR); PINAULT, Pierre-Alain, 31170 TOURNEFEUILLE (FR); BARRON VEGA, Diego, 28019 MADRID (ES)
(74) Representative: Cabinet Le Guen Maillet

(56) References cited:
- EP-A1- 0 934 876
- WO-A1-2018/002855
- US-A1- 2012 045 317

## Description

### TECHNICAL FIELD

The present invention relates to an aircraft propulsion system including a heat exchanger system, together with an aircraft including at least one such propulsion system.

### PRIOR ART

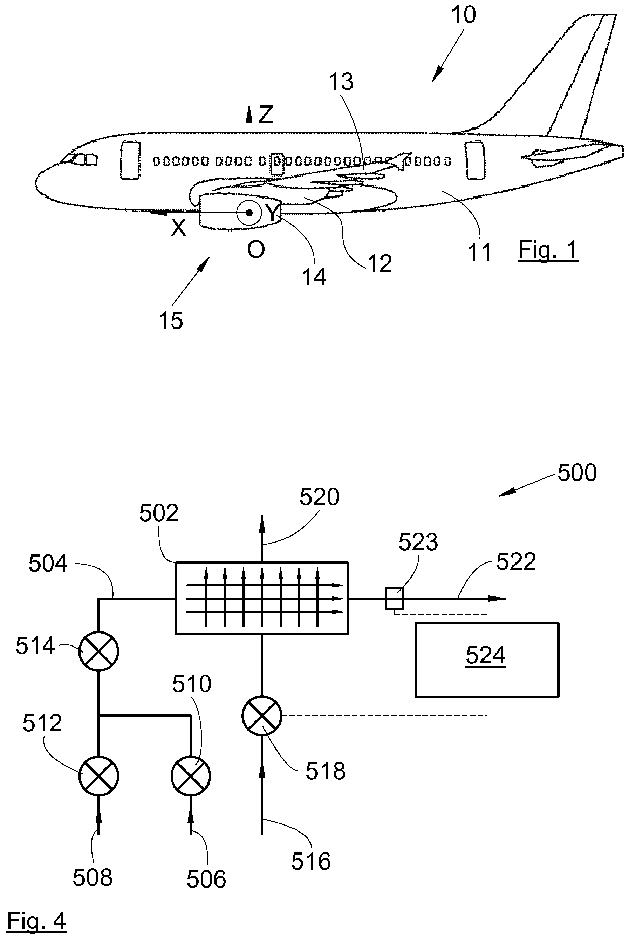

In order to supply hot air whether for a system of air, conditioned so as to guarantee the comfort of the passengers, or for a de-icing system for de-icing the outside surfaces of an aircraft, this system includes a heat exchanger system, which is schematically illustrated in Figure 4.

The heat exchanger system 500 is disposed in the vicinity of the turbojet of the aircraft and includes a heat exchanger 502. The turbojet is fixed to the structure of the wing thanks to a pylon, and the heat exchanger 502 is located between the pylon and the pylon fairing.

The heat exchanger 502 is supplied with hot air through a first supply pipe 504, which bleeds hot air from the high pressure stage 506 or at the intermediate pressure stage 508 of the turbojet, respectively through a first valve 510 and a second valve 512. The first supply pipe 504 also includes a regulating valve 514, which enables regulation of the pressure at the inlet of the heat exchanger 502.

The heat exchanger 502 is supplied with cold air by a second supply pipe 516, which bleeds cold air from the fan duct of the turbojet. The second supply pipe 516 also includes a regulating valve 518, which regulates the quantity of cold air introduced into the heat exchanger 502 so as to regulate the temperature of the hot air exiting the heat exchanger 502.

After having passed through the heat exchanger 502, the cold air, which has been heated, is expelled to the outside through an evacuation pipe 520.

After having passed through the heat exchanger 502, the hot air, which has been cooled, is directed through a transfer pipe 522 to the air management systems like the air conditioning system or the de-icing system.

The heat exchanger system 500 includes a temperature sensor 523, which measures the temperature of the hot air exiting the heat exchanger 502 and a control unit 524, which controls the valves according to the temperature measured by the temperature sensor 523 and the temperature desired for the hot air exiting the heat exchanger 502.

The heat exchanger 502 is with cross flow, that is to say that the hot air and the cold air enter the heat exchanger 502 and exit the heat exchanger 502 along two globally perpendicular directions.

EP-A-0 934 876, US-A-2012/045317 and WO-A-2018/002855 disclose propulsion systems of the state of the art. The two former documents reflect the prior art shown in Figure 4.

Actually, the size of the turbojet increases due to the necessity to increase the bypass ratio and the overall pressure ratio. Due to this increasing of the turbojet, the space allocated to the heat exchanger 502 is reduced and the air exhaust of the heat exchanger 502 is close to the leading edge of the wing, creating perturbations to the boundary layer.

### DESCRIPTION OF THE INVENTION

An aim of the present invention is to propose an aircraft propulsion system including a heat exchanger system, which is less bulky and thus enables better integration in the propulsion system.

To that effect, an aircraft propulsion system is proposed, said aircraft propulsion system including a turbojet including an intermediate pressure stage and a high-pressure stage, a fan duct, and a heat exchanger system which includes:
- a main heat exchanger including a main hot supply connection, a main hot transfer connection pneumatically connected to the main hot supply connection through the main heat exchanger, a main cold supply connection and a main cold evacuation connection pneumatically connected to the main cold supply connection through the main heat exchanger,
- a supply pipe which is connected to the main hot supply connection, and which supplies the heat exchanger with the hot air, and which includes a regulating valve,
- a high pressure pipe which bleeds hot air from the high-pressure stage through a first valve,
- an intermediate pressure pipe which bleeds hot air from the intermediate pressure stage through a second valve, wherein the high-pressure pipe and the intermediate pressure pipe are connected to the inlet of the regulating valve,
- a transfer pipe which is connected to the main hot transfer connection, and which is adapted to transfer the hot air that has passed through the main heat exchanger to an air management system of the aircraft,
- a main supply pipe which is connected to the main cold supply connection, which supplies the main heat exchanger with cold air from the fan duct, and which includes a main regulating valve,
- an evacuation pipe which is connected to the main cold evacuation connection and is adapted to expel the air to the outside,
- a sub heat exchanger including a sub hot supply connection, a sub hot transfer connection pneumatically connected to the sub supply connection through the sub heat exchanger, a sub cold supply connection and a sub cold evacuation connection pneumatically connected to the sub cold supply connection through the sub heat exchanger, wherein the high pressure pipe issued from the first valve goes through the sub heat exchanger between the sub hot supply connection and the sub hot transfer connection,
- a sub supply pipe which is connected to the sub cold supply connection, which supplies the sub heat exchanger with cold air from the fan duct and which includes a sub regulating valve,
- a sub evacuation pipe which is connected to the sub cold evacuation connection and expels the air to the fan duct,
- a temperature sensor, which measures the temperature of the hot air exiting the main heat exchanger through the transfer pipe, and
- a control unit which controls the main regulating valve and the sub regulating valve according to the temperature measured by the temperature sensor and the temperature desired for the hot air exiting the main heat exchanger through the transfer pipe.

The embodiment including two separate heat exchangers induces a size reduction of the main heat exchanger and a better integration in the reduced space between the pylon and the pylon fairing.

Advantageously, the propulsion system includes a pylon with a primary structure which supports the turbojet, the main heat exchanger is located above the primary structure and in the fan duct and the sub heat exchanger is below the primary structure and in the fan duct.

The invention also proposes an aircraft including at least one propulsion system according to one of the preceding variants.

### BRIEF DESCRIPTION OF THE DRAWINGS

The aforementioned characteristics of the invention, as well as others, will emerge more clearly on reading the following description of an embodiment example, said description being made in relation to the attached drawings, among which:
Fig. 1 is a side view of an aircraft including a heat exchanger system according to the invention,
Fig. 2 is a schematic illustration of a heat exchanger system according to the invention,
Fig. 3 shows a side view of the heat exchanger system according to the invention in its environment, and
Fig. 4 is a schematic illustration of a heat exchanger system of the state of the art.

### DETAILED DESCRIPTION OF EMBODIMENTS

In the description that follows, the terms relating to a position are taken with reference to an aircraft in normal flight position, that is to say, as illustrated on Fig. 1, and the positions "forward" and "aft" are taken in relation to the front and rear of the turbojet.

In the description that follows, and by convention, X is the longitudinal axis of the turbojet, which is parallel to the longitudinal axis of the aircraft, Y is the transversal axis, which is horizontal when the aircraft is on the ground, and Z is the vertical axis, which is vertical when the aircraft is on the ground, these three directions X, Y and Z being orthogonal to each other.

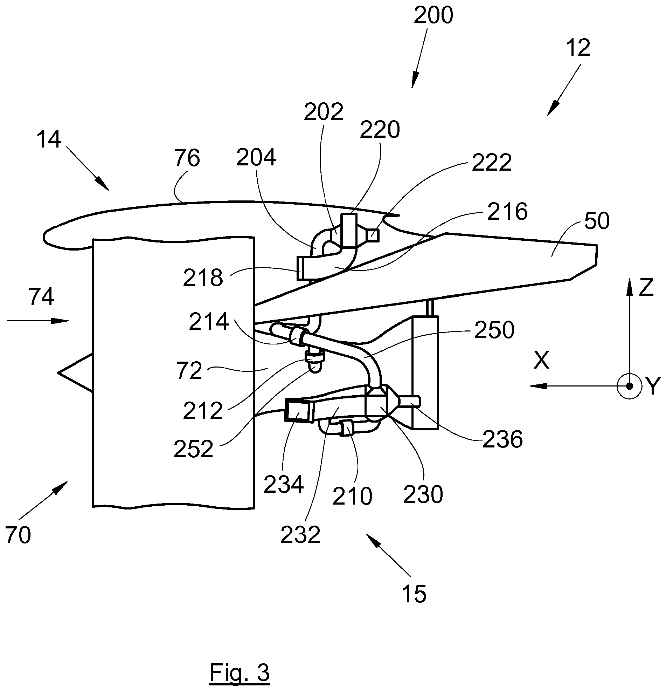

Fig. 1 shows an aircraft 10, which includes a fuselage 11, on either side of which a wing 13 is fastened that supports at least one propulsion system 15 which is shown on Fig. 3 and which includes a pylon 12 and a turbojet 70. The pylon 12 is fastened under the wing 13 and supports the turbojet 70, which conventionally includes a compression stage 72 and a fan duct 74. The pylon 12 includes a primary structure 50, which is fastened at its upper part to the structure of the wing 13 and which supports the turbojet 70 through different fastening points. The primary structure 50 is disposed above the turbojet 70 and its front edge is attached to the turbojet 70 inside the fan duct 74.

The compression stage 72 includes a high-pressure stage 206 and an intermediate pressure stage 208. For example, in cruise conditions at 12497 m (41000 ft), the intermediate pressure at 205 °C is 241 kPa (35 psia), and the high pressure at 517 °C is 1200 kPa (174psia).

The aircraft 10 includes an air management system like for example an air conditioning system and/or a de-icing system.

The propulsion system 15 also includes a nacelle 14, which includes a fairing 76, which surrounds the turbojet 70, and an aerodynamic fairing of the pylon 12, which surrounds the primary structure 50.

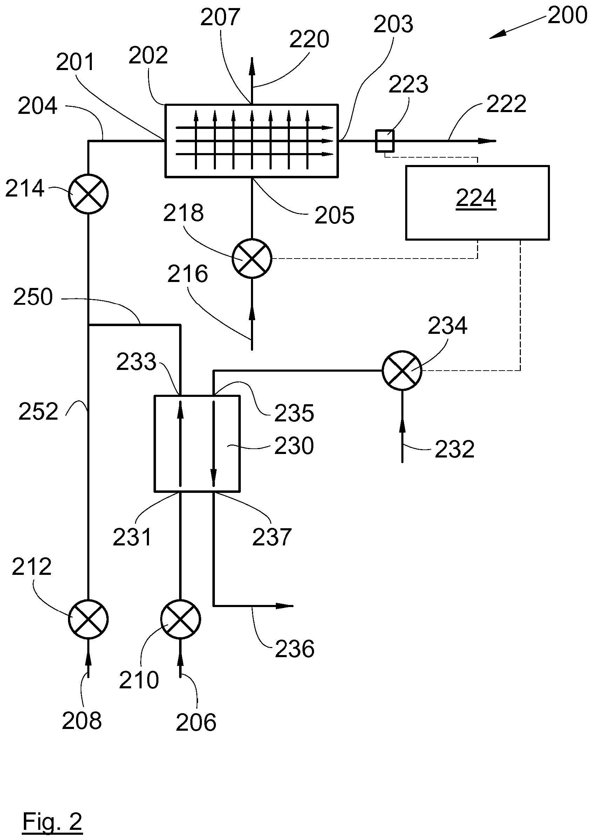

Fig. 2 shows a heat exchanger system 200 according to the invention.

The heat exchanger system 200 includes a main heat exchanger 202 which comprises a main hot supply connection 201, a main hot transfer connection 203 pneumatically connected to the main supply connection 201 through the main heat exchanger 202, a main cold supply connection 205 and a main cold evacuation connection 207 pneumatically connected to the main cold supply connection 205 through the main heat exchanger 202.

The heat exchanger system 200 includes a supply pipe 204 connected to the main hot supply connection 201 and which supplies the main heat exchanger 202 with hot air and which includes a regulating valve 214, which enables regulation of the pressure at the hot supply connection 201.

The heat exchanger system 200 includes a high-pressure pipe 250 which bleeds hot air from the high-pressure stage 206 through a first valve 210.

The heat exchanger system 200 includes an intermediate pressure pipe 252 which bleeds hot air from the intermediate pressure stage 208 through a second valve 212.

The high-pressure pipe 250 and the intermediate pressure pipe 252 are connected together to the inlet of the regulating valve 214.

The heat exchanger system 200 includes a main supply pipe 216 connected to the main cold supply connection 205 and which supplies the main heat exchanger 202 with cold air and which bleeds cold air from the fan duct 74 of the turbojet 70. The main supply pipe 216 also includes a main regulating valve 218, which regulates the quantity of cold air introduced into the main heat exchanger 202 so as to regulate the temperature of the hot air exiting the main heat exchanger 202.

The heat exchanger system 200 includes an evacuation pipe 220 connected to the main cold evacuation connection 207. After having passed through the main heat exchanger 202, the cold air, which has been heated, is expelled to the outside through the evacuation pipe 220.

The heat exchanger system 200 includes a transfer pipe 222 connected to the main hot transfer connection 203. After having passed through the main heat exchanger 202, the hot air, which has been cooled, is directed through the transfer pipe 222 to the air management systems like the air conditioning system or the de-icing system.

The heat exchanger system 200 includes a temperature sensor 223, which measures the temperature of the hot air exiting the main heat exchanger 202 through the transfer pipe 222 and a control unit 224, which controls the main regulating valve 218 and a sub regulating valve 234 according to the temperature measured by the temperature sensor 223 and the temperature desired for the hot air exiting the main heat exchanger 202 through the transfer pipe 222.

The main heat exchanger 202 is here with cross flows, that is to say that the hot air and the cold air enter the main heat exchanger 202 and exit the main heat exchanger 202 along two globally perpendicular directions. But in another embodiment, the passage of the hot air through the main heat exchanger 202 from the supply pipe 204 to the transfer pipe 222 takes place along a first transfer direction and the passage of the cold air through the main heat exchanger 202 from the main supply pipe 216 to the evacuation pipe 220 takes place along a second transfer direction parallel to the first transfer direction but in the opposite direction.

The heat exchanger system 200 includes also a sub heat exchanger 230 connected between the first valve 210 and the regulating valve 214 on the high-pressure pipe 250.

The sub heat exchanger 230 comprises a sub hot supply connection 231, a sub hot transfer connection 233 pneumatically connected to the sub supply connection 231 through the sub heat exchanger 230, a sub cold supply connection 235 and a sub cold evacuation connection 237 pneumatically connected to the sub cold supply connection 235 through the sub heat exchanger 230.

The high-pressure pipe 250 issued from the first valve 210 goes through the sub heat exchanger 230 between the sub hot supply connection 231 and the sub hot transfer connection 233.

The heat exchanger system 200 includes also a sub supply pipe 232 connected to the sub cold supply connection 235 and which supplies the sub heat exchanger 230 with cold air and which bleeds cold air from the fan duct 74 of the turbojet 70. The sub supply pipe 232 also includes the sub regulating valve 234, which regulates the quantity of cold air introduced into the sub heat exchanger 230 so as to regulate the temperature of the hot air exiting the sub heat exchanger 230.

The heat exchanger system 200 includes a sub evacuation pipe 236 connected to the sub cold evacuation connection 237. After having passed through the sub heat exchanger 230, the cold air, which has been heated, is expelled to the fan duct 74 through the evacuation pipe 236.

The sub regulating valve 234 is also controlled by the control unit 224.

The separation of the heat exchanger into a main and a sub heat exchanger induces a size reduction of the main heat exchanger 202 and the integration of this main heat exchanger 202 in a reduced space is easier.

The main heat exchanger 202 is sized for the intermediate pressure stage 208, and as soon as the high-pressure stage 206 is used, the sub heat exchanger 230 is used to complement the main heat exchanger 202, and each heat exchanger 202, 230 has its own cold air inlet 216, 232 and its own regulating valve 218, 234 to modulate independently the cold air flow.

The cooling of the hot air from the intermediate pressure stage 208 is performed by the main heat exchanger 202 and the quantity of cold air introduced in the main heat exchanger 202 is controlled by the main regulating valve 218 to achieve the targeted outlet temperature.

When air is bled from the high-pressure stage 206, the sub regulating valve 234 is controlled to be open as soon as the main regulating valve 218 is fully open and the air flow in the sub heat exchanger 230 is modulated by the sub regulating valve 234 to achieve the targeted outlet temperature. If bleed temperature becomes too low or if the system switched back to the intermediate pressure stage 208, the sub regulating valve 234 is closed and the main regulating valve 218 takes back control on the temperature control.

In the embodiment shown on Fig. 2, the sub heat exchanger 230 is with cross flows but in another embodiment not illustrated, it can be with counter flows.

Fig. 3 shows the heat exchanger system 200 of the propulsion system 15 in its environment.

The main heat exchanger 202 is located above the primary structure 50 and in the fan duct 74 and the sub heat exchanger 230 is below the primary structure 50 and in the fan duct 74. More precisely, the main heat exchanger 202 is located between the pylon and the pylon fairing.

The primary structure 50 comprises a window through which the supply pipe 204 goes through to connect itself with the high-pressure pipe 250 and the intermediate pressure pipe 252.

In the embodiment shown on Fig. 3, the regulating valve 214 is also arranged below the primary structure 50.

The main regulating valve 218 and the sub regulating valve 234 take here the form of a scoop including a door, which is mobile between an open position in which it does not blank off the scoop and a closed position in which it blanks off the scoop so as to regulate the quantity of cold air captured by said scoop.

Each door is motorized so as to ensure its movement and each motor is controlled by the control unit 224. Each door acts as a valve.

Each scoop is oriented so as to be able to capture the cold air that circulates in the fan duct 74.

The new implementation allows a design of the main heat exchanger with low bleed air side pressure drop. This lower pressure drop allows an improvement of the engine start performance thanks to higher pressure delivered to the starter turbine, a higher inlet pressure to air conditioning pack allowing the pack to operate with less ram air and thus reducing induced ram drag, and the challenging of the position of the intermediate pressure stage port, using a lower compressor stage that improves engine specific fuel consumption.

## Claims

1. Propulsion system (15) of an aircraft (10), said propulsion system (15) including a turbojet (70) including an intermediate pressure stage (208) and a high-pressure stage (206), a fan duct (74), and a heat exchanger system (200), which includes:
- a main heat exchanger (202) including a main hot supply connection (201), a main hot transfer connection (203) pneumatically connected to the main hot supply connection (201) through the main heat exchanger (202), a main cold supply connection (205) and a main cold evacuation connection (207) pneumatically connected to the main cold supply connection (205) through the main heat exchanger (202),
- a supply pipe (204) which is connected to the main hot supply connection (201), and which supplies the heat exchanger (202) with hot air, and which includes a regulating valve (214),
- a high pressure pipe (250) which bleeds hot air from the high-pressure stage (206) through a first valve (210),
- an intermediate pressure pipe (252) which bleeds hot air from the intermediate pressure stage (208) through a second valve (212), wherein the high-pressure pipe (250) and the intermediate pressure pipe (252) are connected to the inlet of the regulating valve (214),
- a transfer pipe (222) which is connected to the main hot transfer connection (203), and which is adapted to transfer the hot air that has passed through the main heat exchanger (202) to an air management system of the aircraft (10),
- a main supply pipe (216) which is connected to the main cold supply connection (205), which supplies the main heat exchanger (202) with cold air from the fan duct (74), and which includes a main regulating valve (218),
- an evacuation pipe (220) which is connected to the main cold evacuation connection (207) and is adapted to expel the air to the outside,
- a sub heat exchanger (230) including a sub hot supply connection (231), a sub hot transfer connection (233) pneumatically connected to the sub supply connection (231) through the sub heat exchanger (230), a sub cold supply connection (235) and a sub cold evacuation connection (237) pneumatically connected to the sub cold supply connection (235) through the sub heat exchanger (230), wherein the high pressure pipe (250) issued from the first valve (210) goes through the sub heat exchanger (230) between the sub hot supply connection (231) and the sub hot transfer connection (233),
- a sub supply pipe (232) which is connected to the sub cold supply connection (235), which supplies the sub heat exchanger (230) with cold air from the fan duct (74) and which includes a sub regulating valve (234),
- a sub evacuation pipe (236) which is connected to the sub cold evacuation connection (237) and expels the air to the fan duct (74),
- a temperature sensor (223), which measures the temperature of the hot air exiting the main heat exchanger (202) through the transfer pipe (222), and
- a control unit (224) which controls the main regulating valve (218) and the sub regulating valve (234) according to the temperature measured by the temperature sensor (223) and the temperature desired for the hot air exiting the main heat exchanger (202) through the transfer pipe (222).

2. Propulsion system (15) according to Claim 1, **characterized in that** it includes a pylon (12) with a primary structure (50), which supports the turbojet (70), **in that** the main heat exchanger (202) is located above the primary structure (50) and in the fan duct (74) and **in that** the sub heat exchanger (230) is below the primary structure (50) and in the fan duct (74).

3. Aircraft (10) including at least one propulsion system (15) according to one of the preceding claims.

## Patentansprüche

1. Antriebssystem (15) eines Luftfahrzeugs (10), wobei das Antriebssystem (15) ein Turbostrahltriebwerk (70), das eine Mitteldruckstufe (208) und eine Hochdruckstufe (206) umfasst, einen Gebläsekanal (74) und ein Wärmetauschersystem (200) umfasst, das umfasst:
- einen Hauptwärmetauscher (202), der eine Hauptwärmeversorgungsverbindung (201), eine Hauptwärmeübertragungsverbindung (203), die mit der Hauptwärmeversorgungsverbindung (201) durch den Hauptwärmetauscher (202) pneumatisch verbunden ist, eine Hauptkälteversorgungsverbindung (205) und eine Hauptkälteabtransportverbindung (207), die mit der Hauptkälteversorgungsverbindung (205) durch den Hauptwärmetauscher (202) pneumatisch verbunden ist, umfasst,
- eine Versorgungsleitung (204), die mit der Hauptwärmeversorgungsverbindung (201) verbunden ist und die den Wärmetauscher (202) mit Warmluft versorgt und die ein Regelventil (214) umfasst,
- eine Hochdruckleitung (250), die Warmluft von der Hochdruckstufe (206) durch ein erstes Ventil (210) ablässt,
- eine Mitteldruckleitung (252), die Warmluft von der Mitteldruckstufe (208) durch ein zweites Ventil (212) ablässt, wobei die Hochdruckleitung (250) und die Mitteldruckleitung (252) mit dem Einlass des Regelventils (214) verbunden sind,
- eine Übertragungsleitung (222), die mit der Hauptwärmeübertragungsverbindung (203) verbunden ist und die ausgelegt ist, die Warmluft, die durch den Hauptwärmetauscher (202) geströmt ist, zu einem Luftmanagementsystem des Luftfahrzeugs (10) zu übertragen,
- eine Hauptversorgungsleitung (216), die mit der Hauptkälteversorgungsverbindung (205) verbunden ist, die den Hauptwärmetauscher (202) mit Kaltluft aus dem Gebläsekanal (74) versorgt und die ein Hauptregelventil (218) umfasst,
- eine Abtransportleitung (220), die mit der Hauptkälteabtransportverbindung (207) verbunden und ausgelegt ist, die Luft nach außen abzugeben,
- einen untergeordneten Wärmetauscher (230), der eine untergeordnete Wärmeversorgungsverbindung (231), eine untergeordnete Wärmeübertragungsverbindung (233), die mit der untergeordneten Wärmeversorgungsverbindung (231) durch den untergeordneten Wärmetauscher (230) pneumatisch verbunden ist, eine untergeordnete Kälteversorgungsverbindung (235) und eine untergeordnete Kälteabtransportverbindung (237), die mit der untergeordneten Kälteversorgungsverbindung (235) durch den untergeordneten Wärmetauscher (230) pneumatisch verbunden ist, umfasst, wobei die Hochdruckleitung (250), die von dem ersten Ventil (210) ausgeht, durch den untergeordneten Wärmetauscher (230) zwischen der untergeordneten Wärmeversorgungsverbindung (231) und der untergeordneten Wärmeübertragungsverbindung (233) verläuft,
- eine untergeordnete Versorgungsleitung (232), die mit der untergeordneten Kälteversorgungsverbindung (235) verbunden ist, die den untergeordneten Wärmetauscher (230) mit Kaltluft aus dem Gebläsekanal (74) versorgt und die ein untergeordnetes Regelventil (234) umfasst,
- eine untergeordnete Abtransportleitung (236), die mit der untergeordneten Kälteabtransportverbindung (237) verbunden ist und die Luft zu dem Gebläsekanal (74) abgibt,
- einen Temperatursensor (223), der die Temperatur der Warmluft misst, die aus dem Hauptwärmetauscher (202) durch die Übertragungsleitung (222) austritt, und
- eine Steuereinheit (224), die das Hauptregelventil (218) und das untergeordnete Regelventil (234) gemäß der durch den Temperatursensor (223) gemessenen Temperatur und der für die aus dem Hauptwärmetauscher (202) durch die Übertragungsleitung (222) austretende Warmluft gewünschten Temperatur steuert.

2. Antriebssystem (15) nach Anspruch 1, **gekennzeichnet dadurch, dass** es einen Pylon (12) mit einer Primärstruktur (50) umfasst, der das Turbostrahltriebwerk (70) trägt, dadurch, dass sich der Hauptwärmetauscher (202) über der Primärstruktur (50) und in dem Gebläsekanal (74) befindet, und dadurch, dass sich der untergeordnete Wärmetauscher (230) unterhalb der Primärstruktur (50) und in dem Gebläsekanal (74) befindet.

3. Luftfahrzeug (10), das mindestens ein Antriebssystem (15) nach einem der vorausgehenden Ansprüche umfasst.

## Revendications

1. Système de propulsion (15) d'un aéronef (10), ledit système de propulsion (15) incluant un turboréacteur (70) incluant un étage de pression intermédiaire (208) et un étage de haute pression (206), une canalisation de soufflante (74), et un système d'échangeurs thermiques (200), qui inclut :
- un échangeur thermique principal (202) incluant un raccord d'alimentation en air chaud principal (201), un raccord de transfert d'air chaud principal (203) raccordé pneumatiquement au raccord d'alimentation en air chaud principal (201) par le biais de l'échangeur thermique principal (202), un raccord d'alimentation en air froid principal (205) et un raccord d'évacuation d'air froid principal (207) raccordé pneumatiquement au raccord d'alimentation en air froid principal (205) par le biais de l'échangeur thermique principal (202),
- un tuyau d'alimentation (204) qui est raccordé au raccord d'alimentation en air chaud principal (201), et qui alimente l'échangeur thermique (202) en air chaud, et qui inclut une soupape régulatrice (214),
- un tuyau de haute pression (250) qui purge l'air chaud de l'étage de haute pression (206) par le biais d'une première soupape (210),
- un tuyau de pression intermédiaire (252) qui purge l'air chaud de l'étage de pression intermédiaire (208) par le biais d'une deuxième soupape (212), le tuyau de haute pression (250) et le tuyau de pression intermédiaire (252) étant raccordés à l'entrée de la soupape régulatrice (214),
- un tuyau de transfert (222) qui est raccordé au raccord de transfert d'air chaud principal (203), et qui est conçu pour transférer l'air chaud qui a traversé l'échangeur thermique principal (202) à un système de gestion d'air de l'aéronef (10),
- un tuyau d'alimentation principal (216) qui est raccordé au raccord d'alimentation en air froid principal (205), qui alimente l'échangeur thermique principal (202) en air froid provenant de la canalisation de soufflante (74), et qui inclut une soupape régulatrice principale (218),
- un tuyau d'évacuation (220) qui est raccordé au raccord d'évacuation d'air froid principal (207) et qui est conçu pour expulser l'air vers l'extérieur,
- un échangeur thermique secondaire (230) incluant un raccord d'alimentation en air chaud secondaire (231), un raccord de transfert d'air chaud secondaire (233) raccordé pneumatiquement au raccord d'alimentation secondaire (231) par le biais de l'échangeur thermique secondaire (230), un raccord d'alimentation en air froid secondaire (235) et un raccord d'évacuation d'air froid secondaire (237) raccordé pneumatiquement au raccord d'alimentation en air froid secondaire (235) par le biais de l'échangeur thermique (230), le tuyau de haute pression (250) venant de la première soupape (210) passant à travers l'échangeur thermique secondaire (230) entre le raccord d'alimentation en air chaud secondaire (231) et le raccord de transfert d'air chaud secondaire (233),
- un tuyau d'alimentation secondaire (232) qui est raccordé au raccord d'alimentation en air froid secondaire (235), qui alimente l'échangeur thermique secondaire (230) en air froid provenant de la canalisation de soufflante (74) et qui inclut une soupape régulatrice secondaire (234),
- un tuyau d'évacuation secondaire (236) qui est raccordé au raccord d'évacuation d'air froid (237) et expulse l'air vers la canalisation de soufflante (74),
- un capteur de température (223), qui mesure la température de l'air chaud sortant de l'échangeur thermique principal (202) à travers le tuyau de transfert (222), et
- une unité de commande (224) qui commande la soupape régulatrice principale (218) et la soupape régulatrice secondaire (234) en fonction de la température mesurée par le capteur de température (223) et de la température souhaitée pour l'air chaud sortant de l'échangeur thermique principal (202) à travers le tuyau de transfert (222).

2. Système de propulsion (15) selon la revendication 1, **caractérisé en ce qu'**il inclut un pylône (12) avec une structure primaire (50), qui supporte le turboréacteur (70), **en ce que** l'échangeur thermique principal (202) est situé au-dessus de la structure primaire (50) et dans la canalisation de soufflante (74) et **en ce que** l'échangeur thermique secondaire (230) est au-dessous de la structure primaire (50) et dans la canalisation de soufflante (74).

3. Aéronef (10) incluant au moins un système de propulsion (15) selon l'une des revendications précédentes.
